# FASCICULE DE BREVET EUROPEEN

(11) **EP 3 132 646 B1**
(45) Date de publication et mention de la délivrance du brevet: **07.11.2018**
(21) Numéro de dépôt: 15725720.5
(22) Date de dépôt: 09.04.2015
(51) Int. Cl.: H04W 76/20, H04W 76/30, H04M 15/00

(54) **PROCÉDÉ DE SIMPLIFICATION DE SESSION DE CONTRÔLE D'UNE SESSION UTILISATEUR**
VERFAHREN ZUR VEREINFACHUNG DER STEUERUNGSSITZUNG EINER BENUTZERSITZUNG
METHOD FOR SIMPLIFYING THE CONTROL SESSION OF A USER SESSION

(30) Priorité: 17.04.2014 FR 1453509
(43) Date de publication de la demande: 22.02.2017
(73) Titulaire: Orange, 75015 Paris (FR)
(72) Inventeur: MOUAFIK, Ali-Amine, 92100 Boulogne Billancourt (FR); BARAULT, Eric, F-35235 Thorigne Fouillard (FR)
(86) Numéro de dépôt international: PCT/FR2015/050941
(87) Numéro de publication internationale: WO 2015/158991

(56) Documents cités:
- EP-A1- 2 268 094
- US-A1- 2012 099 715
- NORTEL NETWORKS: "Complete the transient failures result codes", 3GPP DRAFT; N3-050044, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG3, no. Sydney, Australia; 20050207, 7 février 2005 (2005-02-07), XP050077517,
- "3rd Generation Partnership Project; Technical Specification Group Core Network; Charging rule provisioning over Gx interface; (Release 6)", 3GPP STANDARD; 3GPP TS 29.210, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.0.0, 1 décembre 2004 (2004-12-01), pages 1-19, XP050372306,
- "3rd Generation Partnership Project; Technical Specification Group Services and System Aspects; Telecommunication management; Charging management; Diameter charging applications (Release 8)", 3GPP STANDARD; 3GPP TS 32.299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V8.22.0, 14 mars 2014 (2014-03-14), pages 1-143, XP050769856,
- HAKALA L MATTILA ERICSSON J-P KOSKINEN M STURA J LOUGHNEY NOKIA H: "Diameter Credit-Control Application; rfc4006.txt", 20050801, 1 août 2005 (2005-08-01), XP015041993, ISSN: 0000-0003
- "3rd Generation Partnership Project; Technical Specification Group Core Network and Terminals; Policy and Charging Control (PCC) over Gx reference point (Release 8)", 3GPP STANDARD; 3GPP TS 29.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V8.22.0, 10 mars 2014 (2014-03-10), pages 1-105, XP050769648,
- "3rd Generation Partnership Project; Technical Specification Group Core Network and Terminals; Policy and Charging Control signalling flows and Quality of Service (QoS) parameter mapping (Release 8)", 3GPP STANDARD; 3GPP TS 29.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V8.16.0, 15 mars 2013 (2013-03-15), pages 1-128, XP050692155,

## Description

### 1. Domaine de l'invention

La demande d'invention se situe dans le domaine du contrôle des sessions de communication entre un terminal mobile et un réseau de communication par paquets, au travers d'un réseau mobile.

### 2. Etat de la technique antérieure

Dans les réseaux mobiles selon les normes 3GPP (3rd Generation Partnership Project en anglais, ou projet de partenariat de troisième génération) à partir de la version 8 finalisée en décembre 2008, en particulier selon la spécification TS 23.203, il est possible de modifier les paramètres de qualité de service (QoS) et les règles tarifaires appliqués à une session de communication existante en fonction d'événements survenant pendant la session de communication.

Les paramètres de QoS et les règles tarifaires sont communément regroupées sous l'appellation de règles PCC (Policy and Charging Control rules). La session de communication est portée par une connexion, dite connexion PDN (Packet Data Network), établie entre le terminal et une passerelle, dite passerelle PGW (PDN Gateway), à la frontière entre le réseau mobile et le réseau de communication par paquets.

Afin de savoir quelles règles PCC appliquer à une session de communication avant de l'ouvrir, la passerelle PGW, par le biais d'une fonction appelée PCEF (Policy and Charging Enforcement Function), ouvre une session de contrôle avec un équipement de contrôle centralisé, dit entité de contrôle PCRF (Policy and Charging Rules Function), afin que la passerelle PGW et l'entité de contrôle PCRF puissent communiquer entre elles au sujet de la session de communication.

Cette session de contrôle permet notamment à l'entité de contrôle PCRF d'émettre vers la fonction PCEF de la passerelle PGW une requête initiale comprenant les paramètres représentatifs de la session de communication à ouvrir. Ces paramètres comprennent par exemple l'identifiant de l'utilisateur, sa localisation, le type d'offre à laquelle il a souscrit, etc.

La passerelle PGW reçoit en réponse des règles PCC déterminées par l'entité de contrôle PCRF en fonction des paramètres de la requête, ouvre la session de communication en lui appliquant les règles reçues.

La session de contrôle est maintenue jusqu'à la fermeture de la session de communication, car l'entité de contrôle PCRF doit être capable de permettre la facturation exacte de l'utilisation de la session de communication à l'abonné, entre autres. D'autre part, des événements affectant la session de communication peuvent survenir qui ont un impact sur les règles PCC devant lui être appliquées. Dans ce cas la passerelle PGW détectant l'événement émet vers l'entité de contrôle PCRF une nouvelle requête comprenant de nouveaux paramètres représentatifs de la session de communication.

Les événements déclencheurs de cette mise à jour de la session de communication sont par exemple un changement de type d'accès utilisé par le terminal, un changement horaire associé à tarif, l'atteinte d'un seuil de consommation, etc.

Pour certains types d'offres souscrites par les utilisateurs, aucun événement n'est susceptible de déclencher une mise à jour de la session de communication. La session de contrôle reste tout de même ouverte jusqu'à la fermeture de la session de communication, ce qui consomme inutilement de la mémoire pour garder le contexte de la session, ainsi que de la puissance de calcul, à la fois dans la passerelle PGW et dans l'entité de contrôle PCRF. Ceci est d'autant plus dommageable que le nombre de sessions de communications devant être contrôlées simultanément par une même passerelle et une même entité de contrôle PCRF est très élevé et en augmentation constante. La part de ces sessions ne faisant l'objet d'aucune mise à jour est de plus grandissante suite au développement des sessions de communication M2M (machine to machine), qui ont pour caractéristiques une durée longue et peu de trafic en volume.

La spécification 3GPP TS 29.310, V6.0.0 du 1er décembre 2004, décrit la gestion des règles tarifaires dans les réseaux mobiles. Le document "Complete the transient failures result codes", vol. CN WG3, Sydney Australie, du 7 février 2005, est une contribution à cette spécification, où il est suggéré d'indiquer une erreur "transitionnelle" pour une session de contrôle Diameter, lorsqu'il n'est plus nécessaire de contrôler le crédit alloué à la session d'utilisateur qui est contrôlée. Un code d'erreur transitionnelle est émis vers la passerelle, qui devra fermer la session de contrôle Diameter.

Un des buts de l'invention est de remédier à ces inconvénients de l'état de la technique.

### 3. Exposé de l'invention

L'invention vient améliorer la situation à l'aide d'un procédé selon la revendication 1.

Grâce à l'invention, l'entité de contrôle détermine un statut particulier que peuvent avoir les règles de contrôle. Cela permet à l'entité de contrôle de décider d'entreprendre ou de ne pas entreprendre certaines actions ayant un impact sur leur consommation respective de ressources.

En particulier, l'entité de contrôle détermine à quel type d'offre a souscrit l'utilisateur. Pour certaines offres, une session utilisateur ne sera pas affectée par des événements tels qu'un changement de tarif selon un horaire ou un changement de QoS suite à l'atteinte d'un seuil de consommation. Dans ces cas, il est inutile que l'entité de contrôle continue de suivre l'évolution de la session utilisateur en restant à l'écoute d'éventuelles requêtes de mise à jour de la session, car les règles de contrôle ne changeront pas, et il est donc aussi inutile que l'entité de contrôle continue de recevoir de la passerelle de telles requêtes.

Grâce à l'invention, l'entité de contrôle peut libérer des ressources en mémoire et en calcul car elle n'a plus besoin de mémoriser de paramètres relatifs à la session utilisateur.

Le statut prend soit une valeur correspondant à "règle de contrôle modifiable pendant la session utilisateur", soit une valeur correspondant à "règle de contrôle non-modifiable pendant la session utilisateur".

Selon l'invention, le procédé d'établissement d'au moins une règle de contrôle comprend en outre une étape de fermeture de la session de contrôle, si le statut déterminé indique que l'au moins une règle de contrôle est non-modifiable durant la session utilisateur.

L'entité de contrôle n'a pas besoin de maintenir la session de contrôle, car la réponse émise aura pour conséquence que la passerelle la fermera de son côté. L'entité de contrôle peut donc anticiper cette fermeture, ce qui a l'avantage d'éliminer un échange à cette fin entre la passerelle et l'entité de contrôle, et libère plus rapidement des ressources en mémoire et en calcul dans l'entité de contrôle.

En effet, la session de contrôle étant fermée, l'entité de contrôle n'a plus besoin de mémoriser un certain nombre de paramètres, tels que, entre autres, l'identifiant de la session de contrôle entre la passerelle et l'entité de contrôle, le type d'accès utilisé par le terminal, l'adresse IP du terminal, l'adresse IP de la passerelle PGW, le code MCC (Mobile Country Code, France = 208 par exemple) et le code MNC (Mobile Network Code, Orange = 01 ou 02 par exemple) du terminal, le code MSISDN (Mobile Subscriber Integrated Services Digital Network-Number, numéro d'abonné mobile à un réseau numérique de services intégrés), le code IMSI de l'abonné (International Mobile Subscriber Identity, identité internationale d'abonné mobile), et/ou le code IMEI du terminal (International Mobile Station Equipment Identity, identité internationale d'un équipement mobile), la localisation du terminal, etc.

Selon un aspect de l'invention la réponse comprend le statut seulement si le statut déterminé indique que l'au moins une règle de contrôle est non-modifiable durant la session utilisateur.

Avantageusement, la réponse ne comprend pas le statut si sa valeur correspond à "règle de contrôle modifiable pendant la session utilisateur". Ainsi, la réponse selon la norme existante peut continuer d'être utilisée dans ce cas, ce qui minimise les modifications à apporter à l'entité de contrôle et à la passerelle.

Selon un aspect de l'invention le statut est enregistré dans un champ d'un message Diameter.

Avantageusement, aucun champ additionnel n'est nécessaire si la norme Diameter est utilisée pour les échanges entre la passerelle et l'entité de contrôle pendant la session de contrôle. Ainsi, une réponse de type CCA (Credit Control Answer, réponse de contrôle du crédit) selon la norme Diameter peut continuer d'être utilisée, ce qui minimise les modifications à apporter à l'entité de contrôle qui génère et émet la réponse, et à la passerelle qui la reçoit et la traite, lorsque l'invention est mise en oeuvre.

Selon un aspect de l'invention le champ est destiné à comprendre un code d'erreur.

Avantageusement, la valeur du statut correspond à un code d'erreur selon une évolution de la norme Diameter. Ainsi, pour mettre en oeuvre l'invention, la modification de la norme existante est minimisée.

Selon un aspect de l'invention, l'étape de détermination du statut comprend une étape de vérification d'au moins une condition parmi un groupe de conditions comprenant :
- la session utilisateur correspond à une offre de consommation illimitée en volume ou en temps,
- la session utilisateur correspond à une offre dédiée aux communications entre machines,
- la session utilisateur correspond à une offre restreinte à un seul service de communications ;
la vérification étant effectuée sur la base des paramètres MSISDN, IMSI, ou APN (Access Point Name, nom de point d'accès).

A l'aide des paramètres MSISDN, IMSI, ou APN, l'entité de contrôle peut identifier l'offre à laquelle l'utilisateur de la session utilisateur a souscrit. Elle peut alors vérifier si cette offre est une offre illimitée, une offre qui concerne des communications M2M, ou qui est restreinte à un service particulier comme la voix sur IP, par exemple. Dans tous ces cas, aucune surveillance de la session utilisateur n'est nécessaire de la part de l'entité de contrôle, ni de la part de la passerelle, car les règles de contrôle ne sont pas susceptibles de changer au cours de la vie de la session utilisateur.

Les différents aspects du procédé d'établissement d'au moins une règle de contrôle qui viennent d'être décrits peuvent être mis en oeuvre indépendamment les uns des autres ou en combinaison les uns avec les autres.

L'invention concerne aussi un procédé, non couvert par les revendications, de contrôle d'une session de communication entre un réseau de communication par paquets et un terminal mobile attaché à un réseau mobile, dite session utilisateur, la session utilisateur étant portée par une connexion entre le terminal mobile et une passerelle du réseau mobile, la passerelle étant connectée au réseau de communication par paquets,
le procédé étant mis en oeuvre par la passerelle et comprenant :
- une étape de réception d'une requête d'ouverture de la session utilisateur,
- une étape d'ouverture d'une session de contrôle de la session utilisateur, entre la passerelle et une entité de contrôle ;
- une étape d'émission vers l'entité de contrôle d'une requête d'ouverture de la session utilisateur, la requête comprenant des paramètres représentatifs de la session utilisateur ;
- une étape de réception, en provenance de l'entité de contrôle, d'une réponse comprenant au moins une règle de contrôle applicable à la session utilisateur, déterminée en fonction des paramètres représentatifs de la session utilisateur ;
- une étape d'application de l'au moins une règle de contrôle reçue à la session utilisateur ;
- une étape d'ouverture de la session utilisateur ;
la réponse comprenant en outre un paramètre correspondant à un statut de la dite au moins une règle de contrôle, dit statut,
et, si la valeur du statut indique si l'au moins une règle de contrôle est non-modifiable durant la session utilisateur, l'étape de réception d'une réponse est suivie immédiatement d'une étape de fermeture de la session de contrôle, la session utilisateur étant maintenue.

En fonction du statut de la ou des règles de contrôle, reçu avec la réponse, la passerelle peut déterminer qu'une association entre la session utilisateur et la session de contrôle n'est plus nécessaire. Dans ce cas la passerelle ferme la session de contrôle, libérant de ce fait des ressources en mémoire et en calcul, mais ne ferme pas la session utilisateur. En effet, la passerelle n'a besoin de mémoriser qu'un minimum de paramètres identifiant la session utilisateur, suffisant pour être apte à la fermer sur réception d'une requête de libération de la session utilisateur, mais n'a plus besoin de maintenir une session ouverte avec l'entité de contrôle car elle n'émettra aucune requête de mise à jour de la session utilisateur. Elle n'a pas besoin de mémoriser, par exemple, l'identifiant de la session de contrôle, et l'adresse IP de l'entité de contrôle, ni de surveiller les événements déclenchant habituellement une mise à jour de la session de contrôle, contrairement à la technique antérieure.

L'invention concerne encore un dispositif selon la revendication 5.

L'invention concerne aussi une entité de contrôle de type PCRF comprenant le dispositif d'établissement d'au moins une règle de contrôle qui vient d'être décrit.

L'invention concerne encore un dispositif, non couvert par les revendications, de contrôle d'une session de communication apte à mettre en oeuvre le procédé de contrôle d'une session de communication qui vient d'être décrit, dans tous ses modes de réalisation. C'est un dispositif de contrôle d'une session de communication entre un réseau de communication par paquets et un terminal mobile attaché à un réseau mobile, dite session utilisateur, la session utilisateur étant portée par une connexion entre le terminal mobile et une passerelle du réseau mobile, la passerelle étant connectée au réseau de communication par paquets,
le dispositif étant compris dans la passerelle et comprenant :
- un module de réception d'une requête d'ouverture de la session utilisateur,
- un module d'ouverture d'une session de contrôle de la session utilisateur, entre la passerelle et une entité de contrôle ;
- un module d'émission vers l'entité de contrôle d'une requête d'ouverture de la session utilisateur, la requête comprenant des paramètres représentatifs de la session utilisateur ;
- un module de réception, en provenance de l'entité de contrôle, d'une réponse comprenant au moins une règle de contrôle applicable à la session utilisateur, déterminée en fonction des paramètres représentatifs de la session utilisateur ;
- un module d'application de l'au moins une règle de contrôle reçue à la session utilisateur ;
- un module d'ouverture de la session utilisateur ;
- un module de fermeture de la session de contrôle ;
la session de contrôle étant fermée et la session utilisateur maintenue si la réponse comprend un paramètre correspondant à un statut de la dite au moins une règle de contrôle, dit statut, et si la valeur du statut indique que l'au moins une règle de contrôle est non-modifiable durant la session utilisateur.

L'invention concerne aussi une passerelle, non couverte par les revendications, de type PDN Gateway comprenant le dispositif de contrôle d'une session de communication qui vient d'être décrit.

L'invention concerne aussi un signal, non couvert par les revendications, portant un message en provenance d'une entité de contrôle et à destination d'une passerelle d'un réseau mobile, le message comprenant au moins une règle de contrôle destinée à être appliquée à une session de communication entre un réseau de communication par paquets et un terminal mobile attaché au réseau mobile, dite session utilisateur, la session utilisateur étant portée par une connexion entre le terminal mobile et la passerelle du réseau mobile, la passerelle étant connectée au réseau de communication par paquets, une session de contrôle étant portée par une connexion entre la passerelle et l'entité de contrôle, le message comprenant en outre un code d'erreur Diameter indiquant que l'au moins une règle de contrôle est non-modifiable durant la session utilisateur, la réception du signal par la passerelle déclenchant la fermeture de la session de contrôle et le maintien de la session utilisateur.

L'invention concerne aussi un programme d'ordinateur selon la revendication 6.

L'invention concerne aussi un support d'enregistrement selon la revendication 7.

de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un exemple d'enchainement et de mise en oeuvre des étapes d'un procédé d'établissement d'au moins une règle de contrôle d'une session de communication et d'un procédé de contrôle d'une session de communication, selon la technique antérieure,
- la figure 2 présente un exemple d'enchainement et de mise en oeuvre des étapes du procédé d'établissement d'au moins une règle de contrôle d'une session de communication et du procédé de contrôle d'une session de communication, selon un aspect de l'invention,
- la figure 3 présente un exemple de structure d'un dispositif d'établissement d'au moins une règle de contrôle d'une session de communication, selon un aspect de l'invention,
- la figure 4 présente un exemple de structure d'un dispositif de contrôle d'une session de communication, selon un aspect de l'invention.

### 5. Description détaillée d'au moins un mode de réalisation de l'invention

Dans la suite de la description, on présente des exemples de plusieurs modes de réalisation de l'invention se basant sur un réseau LTE/EPC (Long Term Evolution / Evolved Packet Core, norme 3GPP aussi connue sous le nom de 4G), mais l'invention s'applique également à d'autres réseaux d'accès utilisant une fonction PCEF dans un transmet à la passerelle PGW lors d'une étape E301.

Lors d'une étape E401, la passerelle PGW reçoit la requête d'ouverture de session utilisateur US. Avant de répondre à cette requête, la passerelle PGW doit récupérer les règles de contrôle applicable à cette session. Pour ce faire il doit ouvrir une session CS, dite session de contrôle, avec l'entité de contrôle PCRF.

Lors d'une étape E402, la passerelle PGW émet ensuite une requête initiale CCRi ("Credit Control Request"), par exemple de type Diameter. Cette requête CCRi ouvre la session de contrôle CS et comprend les paramètres suivants:
- identifiant de la session de contrôle ;
- IMSI et/ou MSISDN de l'utilisateur ;
- type d'accès ;
- APN ;
- adresse IP de la passerelle S-GW ;
- MCC et MNC de la passerelle S-GW ;
- adresse IP de la passerelle PGW ;
- adresse IP de l'utilisateur ;
- MCC et MNC de l'utilisateur.

Après réception de la requête CCRi lors d'une étape E501, l'entité de contrôle PCRF détermine ensuite lors d'une étape E502 l'ensemble des règles de contrôle applicables à la session US demandée, en fonction des paramètres reçus. Par exemple si le paramètre MSISDN ou IMSI correspond à une offre d'utilisateur prépayée, alors un contrôle du crédit de l'utilisateur sera appliqué.

Lors d'une étape E503, l'entité de contrôle PCRF émet une réponse initiale CCAi ("Credit Control Answer"), par exemple de type Diameter.

Cette réponse CCAi comprend les paramètres suivants:
- identifiant de la session de contrôle ;
- qualité de service à appliquer pour chaque service ;
- qualité service à appliquer pour la session utilisateur ;
- services à bloquer ou à autoriser ;
- si le contrôle de crédit de l'utilisateur et applicable ou non pour chaque d'offre, etc.) ou les informations sur le service comme codec, type de media. L'entité de contrôle PCRF communique les caractéristiques de QoS et de facturation pour la session utilisateur.

L'entité de consommation du crédit/solde OCS (Online Charging System) contrôle le crédit et le solde disponible pour les utilisateurs. En fonction des caractéristiques de facturation reçues de la part de l'entité de contrôle PCRF, la fonction PCEF de la passerelle PGW ouvre une session de contrôle de crédit avec l'OCS afin permettre un contrôle temps réel du solde de l'utilisateur.

Lors de la procédure d'ouverture d'une session utilisateur US (aussi appelée session de connectivité IP, ou "IP CAN session"), la fonction PCEF de la passerelle PGW ouvre une session de contrôle CS associée vers l'entité de contrôle PCRF et lui communique des caractéristiques de qualité QoS et de facturation pour cette session utilisateur US en prenant en compte l'ensemble ou un sous ensemble de paramètres que la fonction PCEF a reçu de la part de différentes entités :
- identifiant du réseau mobile APN, type d'accès (3G, 4G), adresse de la passerelle S-GW, code de pays MCC, code d'opérateur mobile MNC ;
- type d'offre souscrite par l'utilisateur, limite d'usage ;
- nom du service ou de l'application accédée par l'utilisateur, type et format du media, codecs utilisés.

Dans la suite, le terme "passerelle PGW" ou le terme "passerelle PGWn" est utilisé pour désigner indifféremment la passerelle ou la fonction PCEF qu'elle comprend.

Lors d'une étape E101, le terminal UT émet vers l'entité de gestion MME une requête d'attachement au réseau mobile, "Attach request", suivie, lors d'une étape E102, d'une requête de connectivité "PDN connectivity request".

Lors d'une étape E201, l'entité de gestion MME émet vers la passerelle SGW une requête USreq d'ouverture de la session utilisateur US, que la passerelle SGW transmet à la passerelle PGW lors d'une étape E301.

Lors d'une étape E401, la passerelle PGW reçoit la requête d'ouverture de session utilisateur US. Avant de répondre à cette requête, la passerelle PGW doit récupérer les règles de contrôle applicable à cette session. Pour ce faire il doit ouvrir une session CS, dite session de contrôle, avec l'entité de contrôle PCRF.

Lors d'une étape E402, la passerelle PGW émet ensuite une requête initiale CCRi ("Credit Control Request"), par exemple de type Diameter. Cette requête CCRi ouvre la session de contrôle CS et comprend les paramètres suivants:
- identifiant de la session de contrôle ;
- IMSI et/ou MSISDN de l'utilisateur ;
- type d'accès ;
- APN ;
- adresse IP de la passerelle S-GW ;
- MCC et MNC de la passerelle S-GW ;
- adresse IP de la passerelle PGW ;
- adresse IP de l'utilisateur ;
- MCC et MNC de l'utilisateur.

Après réception de la requête CCRi lors d'une étape E501, l'entité de contrôle PCRF détermine ensuite lors d'une étape E502 l'ensemble des règles de contrôle applicables à la session US demandée, en fonction des paramètres reçus. Par exemple si le paramètre MSISDN ou IMSI correspond à une offre d'utilisateur prépayée, alors un contrôle du crédit de l'utilisateur sera appliqué.

Lors d'une étape E503, l'entité de contrôle PCRF émet une réponse initiale CCAi ("Credit Control Answer"), par exemple de type Diameter.

Cette réponse CCAi comprend les paramètres suivants:
- identifiant de la session de contrôle ;
- qualité de service à appliquer pour chaque service ;
- qualité service à appliquer pour la session utilisateur ;
- services à bloquer ou à autoriser ;
- si le contrôle de crédit de l'utilisateur et applicable ou non pour chaque service ;
- limite d'usage par service ou par toute la session utilisateur si applicable.

Après réception de la réponse CCAi lors d'une étape E404, le PWG applique ensuite lors d'une étape E405 l'ensemble des règles de contrôle reçues à la session utilisateur US demandée. La session utilisateur US est ensuite ouverte par la passerelle PGW lors d'une étape E406 où une réponse USres d'ouverture de session utilisateur est émise de la passerelle PGW à la passerelle SGW, que la passerelle SGW transmet à l'entité de gestion MME lors d'une étape E302. A ce stade la session utilisateur US prend naissance.

Pendant la durée de vie de la session utilisateur US, cette session peut être mise à jour soit à l'initiative de l'entité de contrôle PCRF, soit à l'initiative de la passerelle PGW.

Lors d'une mise à jour, par l'opérateur, du type d'offre souscrite par l'utilisateur, ou sur un changement de caractéristique du service initié par l'opérateur, c'est l'entité de contrôle PCRF qui est notifiée avant la passerelle PGW, lors d'une étape E521. L'entité de contrôle PCRF émet alors vers la passerelle PGW, lors d'une étape E523, une mise à jour à l'aide d'un message RAR comprenant de nouvelles règles de contrôle, auquel la passerelle PGW répond par un message d'acquittement de type RAA (non illustré).

Des événements ayant un impact au niveau du réseau mobile sont quant à eux détectés en premier par la passerelle PGW, lors d'une étape E421, comme par exemple un changement de type d'accès, un changement d'horaire lié à un changement tarifaire ou de qualité de service, une atteinte d'un seuil de consommation lié à un changement de capacité ou de bande passante. La passerelle PGW émet alors vers l'entité de contrôle PCRF, lors d'une étape E422, une requête de mise à jour CCRu, et reçoit en retour, lors d'une étape E423, une réponse de mise à jour CCAu.

Dans un cas comme dans l'autre, lors d'une étape E424, la passerelle PGW applique les règles de contrôle mises à jour par le message CCAu à la session utilisateur US, sans l'interrompre.

Plusieurs cycles d'étapes E421 à E424, ou E521 et E523, peuvent avoir lieu, ou aucun cycle.

A la fin de la vie de la session utilisateur US, lors d'une étape E103, le terminal UT émet vers l'entité de gestion MME une requête de détachement du réseau mobile, "Detach request", suivie, lors d'une étape E104, d'une requête de fin de connectivité "PDN connectivity request".

Lors d'une étape E202, l'entité de gestion MME émet vers la passerelle SGW une requête "release session request" de fermeture de session utilisateur, que la passerelle SGW transmet à la passerelle PGW lors d'une étape E303.

Lors d'une étape E407, la passerelle PGW reçoit la requête de fermeture de session utilisateur. Avant de répondre à cette requête, la passerelle PGW doit obtenir l'autorisation de fermer cette session. Pour ce faire la passerelle PGW émet lors d'une étape E408 une requête terminale CCRt ("Credit Control Request"), par exemple de type Diameter. Cette requête CCRt comprend les paramètres suivants:
- identifiant de la session de contrôle ;
- MSISDN ou IMSI ;
- motif de fermeture de la session ;
- usage consommé si applicable.

Après réception de la requête CCRt lors d'une étape E504, l'entité de contrôle PCRF émet ensuite lors d'une étape E505 une réponse terminale CCAt ("Credit Control Answer"), par exemple de type Diameter.

Cette réponse CCAt comprend les paramètres suivants:
- identifiant de la session de contrôle ;
- acquittement.

Après réception de la réponse CCAt lors d'une étape E409, le PWG supprime, lors d'une étape E410, l'ensemble des règles de contrôle de la session utilisateur US à fermer, et, lors d'une étape E403, ferme la session de contrôle CS. La session utilisateur US est ensuite fermée par la passerelle PGW lors d'une étape E411 où une réponse "release session response" de fermeture de session utilisateur est émise de la passerelle PGW à la passerelle SGW, que la passerelle SGW transmet à l'entité de gestion MME lors d'une étape E304. A ce stade, la vie de la session utilisateur US a pris fin.

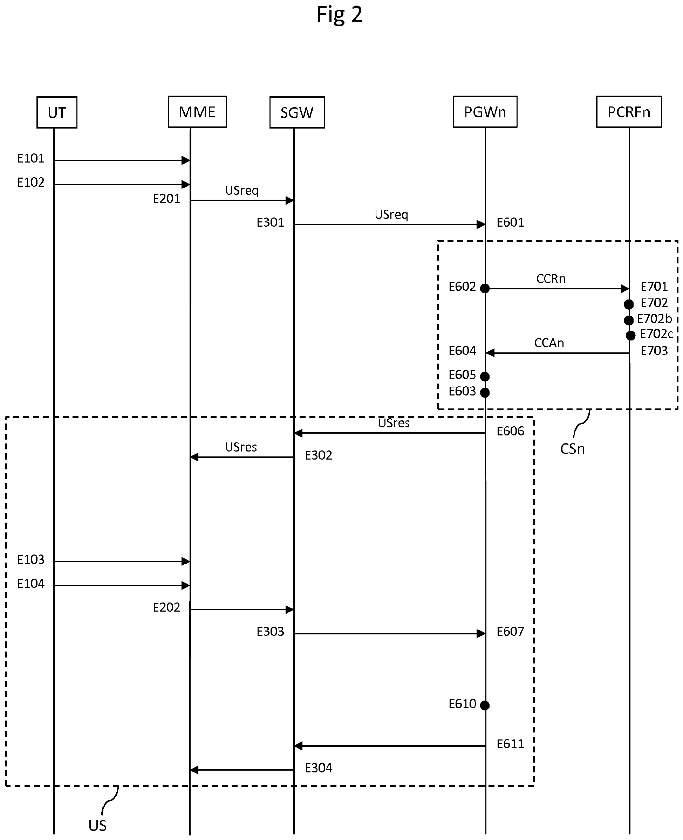

La **figure 2** présente un exemple d'enchainement et de mise en oeuvre des étapes du procédé d'établissement d'au moins une règle de contrôle d'une session de communication selon un aspect de l'invention, et du procédé de contrôle d'une session de communication selon un aspect de l'invention.

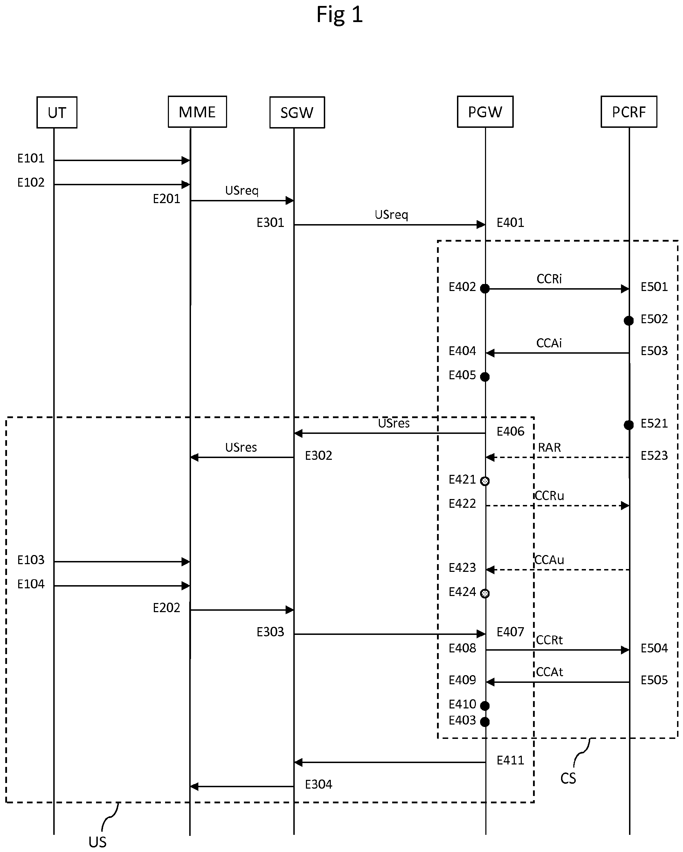

Les étapes E101 à 104, E201 à E202 et E301 à E304 ont été présentées en référence à la figure 1.

Le procédé de contrôle d'une session de communication selon l'invention est mis en oeuvre par la passerelle PGWn et comprend les étapes E601 à E611 y compris E605b.

Le procédé d'établissement d'au moins une règle de contrôle d'une session de communication selon l'invention est mis en oeuvre par l'entité de contrôle PCRFn et comprend les étapes E701 à E703, y compris E702b et E702c.

Lors d'une étape E601 similaire à l'étape E401 de la figure 1, la passerelle PGWn reçoit la requête d'ouverture de session utilisateur US. Avant de répondre à cette requête, la passerelle PGWn doit récupérer les règles de contrôle applicable à cette session. Pour ce faire il doit ouvrir une session de contrôle CSn avec l'entité de contrôle PCRFn.

Lors d'une étape E602 similaire à l'étape E402 de la figure 1, la passerelle PGWn émet ensuite une requête initiale CCRn ("Credit Control Request"), par exemple de type Diameter. Cette requête CCRn ouvre la session de contrôle CSn et comprend des paramètres similaires à ceux de la requête CCRi de la figure 1.

Après réception de la requête CCRn lors d'une étape E701 similaire à l'étape E501 de la figure 1, l'entité de contrôle PCRFn détermine ensuite lors d'une étape E702 similaire à l'étape E502 de la figure 1 l'ensemble des règles de contrôle applicables à la session US demandée, en fonction des paramètres reçus.

Contrairement à la technique antérieure, le procédé d'établissement d'au moins une règle de contrôle d'une session de communication selon l'invention comprend en outre une étape E702b, consécutive, antérieure ou simultanée à l'étape E702, où l'entité de contrôle PCRFn détermine si les règles de contrôle déterminées ou à déterminer lors de l'étape E702 possèdent un statut particulier. Cette détermination est faite en fonction des paramètres reçus lors de l'étape E701, et doit donc lui être postérieure.

Par exemple, l'entité de contrôle PCRFn détermine lors de l'étape E702b si les règles de contrôle sont modifiables durant la vie de la session utilisateur US. Parmi les paramètres reçus dans la requête CCRn, les paramètres MSISDN ou IMSI, et APN, par exemple, sont déterminants car ils identifient le type d'offre souscrit par l'utilisateur. Pour certaines offres, les règles de contrôle s'appliquant à une session utilisateur sont invariantes dans le temps, par exemple pour toutes les offres comprenant une consommation illimitée en volume de données ou en temps, ou pour les offres spécifiques telles que des offres mono-service (telles que voix sur IP exclusivement) ou des offres dédiées aux communications entre machines (M2M). A partir de ces paramètres déterminants, l'entité de contrôle PCRFn détermine donc si d'éventuelles mises à jour sont possibles, ou impossibles, sur les règles de contrôle à appliquer à la session utilisateur.

Lors d'une étape E702c, s'il est déterminé que les règles de contrôle sont non-modifiables, l'entité de contrôle PCRFn inclut cette information dans la réponse CCAn ("Credit Control Answer"), par exemple de type Diameter.

Lors d'une étape E703, cette réponse CCAn est émise vers la passerelle PGWn.

Cette réponse CCAn comprend, en plus des paramètres similaires à ceux de la requête CCAi de la figure 1, un paramètre correspondant au statut des règles de contrôle, tel que déterminé lors de l'étape E702b. Ce paramètre de statut peut par exemple prendre la forme d'un nouveau code d'erreur s'ajoutant aux codes d'erreur existant, selon une évolution de la norme Diameter, ce code d'erreur étant destiné à être compris dans un champ dont l'emplacement est déjà prévu dans la structure des messages CCR et CCA. Ce champ peut être par exemple "Result Code AVP". Des codes d'erreur Diameter existants sont :
- DIAMETER_PCC_BEARER_EVENT (4141) ;
- DIAMETER_AN_GW_FAILED (4143) ;
- DIAMETER_PENDING_TRANSACTION (4144).

La réponse CCAn, émise lors de l'étape E703, transporte un nouveau code d'erreur selon une évolution de la norme Diameter, qui peut être par exemple:
DIAMETER_NO_MORE_POLICY_CONTROL_APPLICABLE (4145).

Alternativement, le statut des règles de contrôle peut être transporté dans un champ des messages CCR et CCA autre que le champ "Result Code AVP", soit existant mais inutilisé, soit additionnel, selon une autre évolution de la norme Diameter.

Après réception de la réponse CCAn lors d'une étape E604, le PWGn applique à la session utilisateur US demandée l'ensemble des règles de contrôle reçues, lors d'une étape E605.

Si la réponse CCAn comprend un paramètre de statut et que sa valeur est "non-modifiable", par exemple le code d'erreur Diameter 4145 décrit ci-dessus, cela signifie que les règles de contrôle applicables à la session US ne sont pas modifiables, et qu'il n'y aura pas de cycle de mise à jour similaire à celui des étapes E421 à E424, ou E521 et E523 décrites en référence à la figure 1. Dans ce cas, lors d'une étape E603, la passerelle PGWn ferme la session de contrôle CSn.

Comme la session CSn est fermée, la passerelle PGWn n'a plus à mémoriser l'identifiant de la session de contrôle, et l'adresse IP de l'entité de contrôle PCRFn.

De même, comme la session CSn est fermée, l'entité de contrôle PCRFn n'a plus à mémoriser l'identifiant de la session de contrôle, le type d'accès, l'adresse IP de la passerelle S-GW, l'adresse IP du terminal de l'utilisateur, le code MCC et le code MNC de la passerelle S-GW, l'adresse IP de la passerelle PGWn, le code MCC et le code MNC du terminal de l'utilisateur, le code MSISDN, le code IMSI, et/ou le code IMEI du terminal de l'utilisateur, ainsi que la localisation du terminal de l'utilisateur.

La session utilisateur US est ensuite ouverte par la passerelle PGWn lors d'une étape E606 similaire à l'étape E406 de la figure 1, où une réponse "create session response" d'ouverture de session utilisateur est émise de la passerelle PGW à la passerelle SGW, que la passerelle SGW transmet à l'entité de gestion MME lors d'une étape E302. A ce stade la session utilisateur US prend naissance.

A la fin de la vie de la session utilisateur US, lors d'une étape E103, le terminal UT émet vers l'entité de gestion MME une requête de détachement du réseau mobile, "Detach request", suivie, lors d'une étape E104, d'une requête de fin de connectivité "PDN connectivity request".

Lors d'une étape E202, l'entité de gestion MME émet vers la passerelle SGW une requête "release session request" de fermeture de session utilisateur, que la passerelle SGW transmet à la passerelle PGWn lors d'une étape E303.

Lors d'une étape E607 similaire à l'étape E407 de la figure 1, la passerelle PGWn reçoit la requête de fermeture de session utilisateur. Comme aucune session de contrôle n'existe, la passerelle PGWn ne peut pas obtenir l'autorisation de l'entité de contrôle PCRFn et prend elle-même la décision immédiate de supprimer, lors d'une étape E610, l'ensemble des règles de contrôle de la session utilisateur US à fermer. La session utilisateur US est ensuite fermée par la passerelle PGWn lors d'une étape E611, similaire à l'étape E411 de la figure 1, où une réponse "release session response" de fermeture de session utilisateur est émise de la passerelle PGWn à la passerelle SGW, que la passerelle SGW transmet à l'entité de gestion MME lors d'une étape E304. A ce stade, la vie de la session utilisateur US a pris fin.

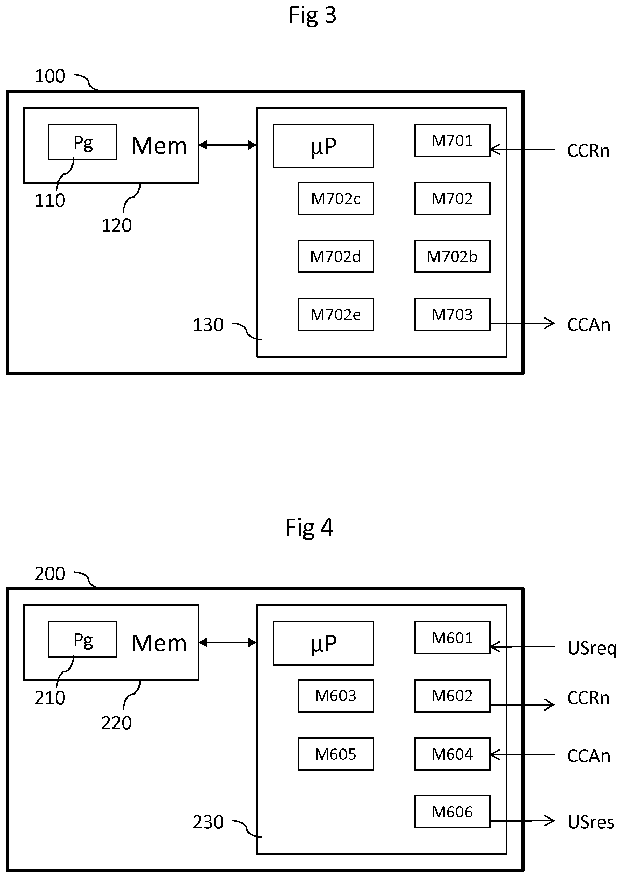

En relation avec la **figure 3**, on présente maintenant un exemple de structure d'un dispositif d'établissement d'au moins une règle de contrôle d'une session de communication, selon un aspect de l'invention.

Le dispositif 100 met en oeuvre le procédé d'établissement d'au moins une règle de contrôle d'une session de communication, dont différents modes de réalisation viennent d'être décrits.

Un tel dispositif 100 peut être mis en oeuvre dans une entité de contrôle, spécialisée dans l'établissement de règles de contrôle PCC (caractéristiques de QoS et de facturation) pour sessions de connectivité IP (sessions utilisateur), par exemple dans un équipement de type "Policy Control and Charging Rules Function" (PCRF, fonction des règles de politique et de comptage, en anglais).

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé d'établissement d'au moins une règle de contrôle d'une session de communication selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module (M701) de réception, apte à recevoir une requête CCRn d'ouverture d'une session utilisateur, la requête comprenant des paramètres représentatifs de la session utilisateur ;
- un module (M702) de détermination, apte à déterminer au moins une règle de contrôle applicable à la session utilisateur, en fonction des paramètres représentatifs de la session utilisateur ;
- un module (M702b) de détermination, apte à déterminer un paramètre correspondant à un statut de la dite au moins une règle de contrôle, dit statut, en fonction des paramètres représentatifs de la session utilisateur, le statut indiquant si l'au moins une règle de contrôle est non-modifiable durant la session utilisateur ;
- un module (M702c) d'insertion, apte à insérer le statut déterminé dans une réponse CCAn à la requête d'ouverture ;
- un module (M703) d'émission, apte à émettre la réponse CCAn comprenant également l'au moins une règle de contrôle déterminée.

Avantageusement, l'unité de traitement 130 peut comprendre:
- un module (M702d) de vérification, sur la base des paramètres MSISDN, IMSI, ou APN représentatifs de la session utilisateur, d'au moins une condition parmi un groupe de conditions comprenant :
   ∘ la session utilisateur correspond à une offre de consommation illimitée en volume ou en temps,
   ∘ la session utilisateur correspond à une offre dédiée aux communications entre machines,
   ∘ la session utilisateur correspond à une offre restreinte à un seul service de communications,
   le statut indiquant que l'au moins une règle de contrôle est non-modifiable durant la session utilisateur si l'une des conditions est vérifiée ;
- un module (M702e) de fermeture d'une session de contrôle ouverte lors de la réception de la requête d'ouverture d'une session utilisateur, si le statut déterminé indique que l'au moins une règle de contrôle est non-modifiable durant la session utilisateur.

Les modules décrits en relation avec la figure 3 peuvent être des modules matériels ou logiciels.

En relation avec la **figure 4**, on présente maintenant un exemple de structure d'un dispositif de contrôle d'une session de communication, selon un aspect de l'invention.

Le dispositif 200 met en oeuvre le procédé de contrôle d'une session de communication, dont différents modes de réalisation viennent d'être décrits.

Un tel dispositif 200 peut être mis en oeuvre dans une passerelle PDN Gateway (P-GW) qui fournit entre autres la connectivité IP aux utilisateurs finaux (attribution d'adresse IP) et des fonctionnalités de comptage, d'application de politiques avancées de QoS (Qualité de Service) grâce à sa fonction PCEF.

Par exemple, le dispositif 200 comprend une unité de traitement 230, équipée par exemple d'un microprocesseur µP, et pilotée par un programme d'ordinateur 210, stocké dans une mémoire 220 et mettant en oeuvre le procédé de contrôle d'une session de communication selon l'invention. A l'initialisation, les instructions de code du programme d'ordinateur 210 sont par exemple chargées dans une mémoire RAM, avant d'être exécutées par le processeur de l'unité de traitement 230.

Un tel dispositif 200 comprend :
- un module (M601) de réception, apte à recevoir une requête USreq d'ouverture de la session utilisateur,
- un module (M602) d'ouverture, apte à ouvrir une session de contrôle de la session utilisateur, entre la passerelle et l'entité de contrôle ;
- un module (M602) d'émission, apte à émettre vers l'entité de contrôle une requête CCRn d'ouverture de la session utilisateur, la requête comprenant des paramètres représentatifs de la session utilisateur ;
- un module (M604) de réception, apte à recevoir en provenance de l'entité de contrôle, une réponse comprenant au moins une règle de contrôle applicable à la session utilisateur, déterminée en fonction des paramètres représentatifs de la session utilisateur ;
- un module (M605) d'application, apte à appliquer l'au moins une règle de contrôle reçue à la session utilisateur ;
- un module (M606) d'ouverture, apte à ouvrir la session utilisateur et à émettre une réponse USres à la requête USreq ;
- un module (M603) de fermeture, apte à fermer la session de contrôle en maintenant ouverte la session utilisateur, si la réponse comprend un paramètre correspondant à un statut de la dite au moins une règle de contrôle, dit statut, et si la valeur du statut indique que l'au moins une règle de contrôle est non-modifiable durant la session utilisateur.

Les modules décrits en relation avec la figure 4 peuvent être des modules matériels ou logiciels.

Les exemples de réalisation de l'invention qui viennent d'être présentés ne sont que quelques uns des modes de réalisation envisageables. Ils montrent que l'invention permet de simplifier les échanges entre une entité de contrôle PCRF et la fonction PCEF d'une passerelle de type PDN Gateway, en raccourcissant au maximum la durée de la session de contrôle entre les deux équipements, lorsque cette session contrôle une session utilisateur dont les règles déterminée par l'entité de contrôle PCRF sont non-modifiables.

## Revendications

1. **Procédé** d'établissement d'au moins une règle de contrôle d'une session de communication entre un réseau de communication par paquets et un terminal mobile (UT) attaché à un réseau mobile, dite session utilisateur (US), la session utilisateur étant portée par une connexion entre le terminal mobile et une passerelle (PGWn) du réseau mobile, la passerelle étant connectée au réseau de communication par paquets, une session de contrôle (CSn) étant portée par une connexion entre la passerelle et une entité de contrôle (PCRFn) du réseau mobile,
le procédé étant mis en oeuvre par l'entité de contrôle et comprenant :
• une étape (E701) de réception d'une requête d'ouverture de la session utilisateur, la requête comprenant des paramètres représentatifs de la session utilisateur ;
• une étape (E702) de détermination d'au moins une règle de contrôle applicable à la session utilisateur, en fonction des paramètres représentatifs de la session utilisateur ;
• une étape (E703) d'émission d'une réponse comprenant l'au moins une règle de contrôle ;
• une étape (E702b) de détermination d'un paramètre correspondant à un statut de la dite au moins une règle de contrôle, dit statut, en fonction des paramètres représentatifs de la session utilisateur, le statut indiquant si l'au moins une règle de contrôle est non-modifiable durant la session utilisateur ;
• en fonction de la valeur du statut, une étape (E702c) d'insertion du statut dans la réponse, préalablement à l'étape d'émission,
• une étape de fermeture de la session de contrôle, si le statut déterminé indique que l'au moins une règle de contrôle est non-modifiable durant la session utilisateur.

2. **Procédé** d'établissement d'au moins une règle de contrôle selon la revendication précédente, **caractérisé en ce que**
le statut est enregistré dans un champ d'un message Diameter.

3. **Procédé** d'établissement d'au moins une règle de contrôle selon la revendication précédente, **caractérisé en ce que**
le champ est destiné à comprendre un code d'erreur.

4. **Procédé** d'établissement d'au moins une règle de contrôle selon l'une des revendications précédentes, **caractérisé en ce que**
l'étape de détermination du statut comprend une étape de vérification d'au moins une condition parmi un groupe de conditions comprenant :
• la session utilisateur correspond à une offre de consommation illimitée en volume ou en temps,
• la session utilisateur correspond à une offre dédiée aux communications entre machines,
• la session utilisateur correspond à une offre restreinte à un seul service de communications ;
la vérification étant effectuée sur la base des paramètres MSISDN, IMSI, ou APN.

5. **Dispositif** d'établissement d'au moins une règle de contrôle d'une session de communication entre un réseau de communication par paquets et un terminal mobile (UT) attaché à un réseau mobile, dite session utilisateur (US), la session utilisateur étant portée par une connexion entre le terminal mobile et une passerelle (PGWn) du réseau mobile, la passerelle étant connectée au réseau de communication par paquets, une session de contrôle (CSn) étant portée par une connexion entre la passerelle et une entité de contrôle (PCRFn) du réseau mobile,
le dispositif étant compris dans l'entité de contrôle et comprenant :
• un module (M701) de réception d'une requête d'ouverture de la session utilisateur, la requête comprenant des paramètres représentatifs de la session utilisateur ;
• un module (M702) de détermination d'au moins une règle de contrôle applicable à la session utilisateur, en fonction des paramètres représentatifs de la session utilisateur ;
• un module (M703) d'émission d'une réponse comprenant l'au moins une règle de contrôle ;
• un module (M702b) de détermination d'un paramètre correspondant à un statut de la dite au moins une règle de contrôle, dit statut, en fonction des paramètres représentatifs de la session utilisateur, le statut indiquant si l'au moins une règle de contrôle est non-modifiable durant la session utilisateur ;
• un module (M702c) d'insertion du statut dans la réponse
• un module de fermeture de la session de contrôle si le statut déterminé indique que l'au moins une règle de contrôle est non-modifiable durant la session utilisateur.

6. **Programme d'ordinateur, caractérisé en ce qu'**il comprend des instructions pour la mise en oeuvre des étapes du procédé d'établissement d'au moins une règle de contrôle d'une session de communication selon la revendication 1, lorsque ce programme est exécuté par un processeur.

7. **Support d'enregistrement** lisible par une entité de contrôle sur lequel est enregistré le programme selon la revendication 6.

## Patentansprüche

1. Verfahren zur Erstellung mindestens einer Steuerungsregel einer Kommunikationssitzung zwischen einem Paket-Kommunikationsnetz und einem mobilen Endgerät (UT) das mit einem mobilen Netz verbunden ist, Benutzersitzung (US) genannt, wobei die Benutzersitzung von einem Anschluss zwischen dem mobilen Endgerät und einem Gateway (PGWn) des mobilen Netzes getragen wird, wobei das Gateway an das Paket-Kommunikationsnetz angeschlossen ist, wobei eine Steuerungssitzung (CSn) von einem Anschluss zwischen dem Gateway und einer Steuerungseinheit (PCRFn) des mobilen Netzes getragen wird,
wobei das Verfahren von der Steuerungseinheit eingesetzt wird und umfasst:
• einen Schritt (E701) des Empfangs einer Anfrage nach Eröffnung der Benutzersitzung, wobei die Anfrage für die Benutzersitzung repräsentative Parameter umfasst,
• einen Schritt (E702) der Bestimmung mindestens einer Steuerungsregel, die für die Benutzersitzung anwendbar ist, in Abhängigkeit von den für die Benutzersitzung repräsentativen Parametern;
• einen Schritt (E703) des Sendens einer Antwort, umfassend die mindestens eine Steuerungsregel;
• einen Schritt (E702b) der Bestimmung eines Parameters entsprechend einem Status der mindestens einen Steuerungsregel, Status genannt, in Abhängigkeit von den für die Benutzersitzung repräsentativen Parametern, wobei der Status angibt, ob die mindestens eine Steuerungsregel während der Benutzersitzung nicht veränderbar ist;
• in Abhängigkeit von dem Wert des Status einen Schritt (E702c) des Einsetzens des Status in die Antwort für den Sendeschritt,
• einen Schritt des Schließens der Steuerungssitzung, wenn der bestimmte Status angibt, dass die mindestens eine Steuerungsregel während der Benutzersitzung nicht veränderbar ist.

2. Verfahren zur Erstellung mindesten einer Steuerungsregel nach dem vorhergehenden Anspruch, **dadurch gekennzeichnet, dass** der Status in einem Diameter-Nachrichtenfeld aufgezeichnet ist.

3. Verfahren zur Erstellung mindestens einer Steuerungsregel nach dem vorhergehenden Anspruch, **dadurch gekennzeichnet, dass** das Feld dazu bestimmt ist, einen Fehlercode zu umfassen.

4. Verfahren zur Erstellung mindestens einer Steuerungsregel nach einem der vorhergehenden Ansprüche, **dadurch gekennzeichnet, dass** der Schritt der Bestimmung des Status einen Schritt der Überprüfung mindestens einer Bedingung in einer Gruppe von Bedingungen umfasst, umfassend:
• die Benutzersitzung entspricht einem unbegrenzten Konsumangebot an Volumen oder Zeit,
• die Benutzersitzung entspricht einem Angebot, das für die Kommunikationen zwischen Maschinen bestimmt ist,
• die Benutzersitzung entspricht einem Angebot, das auf einen einzigen Kommunikationsdienst beschränkt ist;
wobei die Überprüfung auf Basis der Parameter MSISDN, IMSI oder APN erfolgt.

5. Vorrichtung zur Erstellung mindestens einer Steuerungsregel einer Kommunikationssitzung zwischen einem Paket-Kommunikationsnetz und einem mobilen Endgerät (UT) das mit einem mobilen Netz verbunden ist, Benutzersitzung (US) genannt, wobei die Benutzersitzung von einem Anschluss zwischen dem mobilen Endgerät und einem Gateway (PGWn) des mobilen Netzes getragen wird, wobei das Gateway an das Paket-Kommunikationsnetz angeschlossen ist, wobei eine Steuerungssitzung (CSn) von einem Anschluss zwischen dem Gateway und einer Steuerungseinheit (PCRFn) des mobilen Netzes getragen wird,
wobei die Vorrichtung in der Steuerungseinheit enthalten ist und umfasst:
• ein Modul (M701) zum Empfang einer Anfrage nach Eröffnung der Benutzersitzung, wobei die Anfrage für die Benutzersitzung repräsentative Parameter umfasst,
• ein Modul (M702) zur Bestimmung mindestens einer Steuerungsregel, die für die Benutzersitzung anwendbar ist, in Abhängigkeit von den für die Benutzersitzung repräsentativen Parametern;
• ein Modul (M703) des Sendens einer Antwort, umfassend die mindestens eine Steuerungsregel;
• ein Modul (M702b) zur Bestimmung eines Parameters entsprechend einem Status der mindestens einen Steuerungsregel, Status genannt, in Abhängigkeit von den für die Benutzersitzung repräsentativen Parametern, wobei der Status angibt, ob die mindestens eine Steuerungsregel während der Benutzersitzung nicht veränderbar ist;
• ein Modul (M702c) zum Einsetzen des Status in die Antwort,
• ein Modul zum Schließen der Steuerungssitzung, wenn der bestimmte Status angibt, dass die mindestens eine Steuerungsregel während der Benutzersitzung nicht veränderbar ist.

6. Computerprogramm, **dadurch gekennzeichnet, dass** es Anweisungen für den Einsatz der Schritte des Verfahrens zur Erstellung mindestens einer Steuerungsregel einer Kommunikationssitzung nach Anspruch 1 umfasst, wenn dieses Programm von einem Prozessor ausgeführt wird.

7. Aufzeichnungsträger, der von einer Kontrolleinheit lesbar ist, auf dem das Programm nach Anspruch 6 aufgezeichnet ist.

## Claims

1. **Method** for establishing at least one control rule for a communication session between a packet communication network and a mobile terminal (UT) attached to a mobile network, referred to as a user session (US), the user session being carried by a connection between the mobile terminal and a gateway (PGWn) of the mobile network, the gateway being connected to the packet communication network, a control session (CSn) being carried by a connection between the gateway and a control entity (PCRFn) of the mobile network,
the method being carried out by the control entity and including:
• a step (E701) of receiving a request to open the user session, the request including parameters representing the user session;
• a step (E702) of determining at least one control rule applicable to the user session according to the parameters representing the user session;
• a step (E703) of transmitting a response, including the at least one control rule;
• a step (E702b) of determining a parameter corresponding to a status of said at least one control rule, referred to as the status, according to the parameters representing the user session, the status indicating whether the at least one control rule is non-modifiable during the user session;
• according to the value of the status, a step (E702c) of inserting the status into the response, prior to the transmission step;
• a step of releasing the control session if the determined status indicates that the at least one control rule is non-modifiable during the user session.

2. **Method** for establishing at least one control rule according to the preceding claim, **characterized in that** the status is recorded in a field of a Diameter message.

3. **Method** for establishing at least one control rule according to the preceding claim, **characterized in that** the field is intended to include an error code.

4. **Method** for establishing at least one control rule according to one of the preceding claims, **characterized in that**
the step of determining the status includes a step of verifying at least one condition from a group of conditions including:
• the user session corresponds to an unlimited-volume or unlimited-time usage offering,
• the user session corresponds to an offering dedicated to machine-to-machine communications,
• the user session corresponds to an offering restricted to a single communications service;
the verification being carried out on the basis of MSISDN, IMSI or APN parameters.

5. **Device** for establishing at least one control rule for a communication session between a packet communication network and a mobile terminal (UT) attached to a mobile network, referred to as a user session (US), the user session being carried by a connection between the mobile terminal and a gateway (PGWn) of the mobile network, the gateway being connected to the packet communication network, a control session (CSn) being carried by a connection between the gateway and a control entity (PCRFn) of the mobile network,
the device being included in the control entity and including:
• a module (M701) for receiving a request to open the user session, the request including parameters representing the user session;
• a module (M702) for determining at least one control rule applicable to the user session according to the parameters representing the user session;
• a module (M703) for transmitting a response including the at least one control rule;
• a module (M702b) for determining a parameter corresponding to a status of said at least one control rule, referred to as the status, according to the parameters representing the user session, the status indicating whether the at least one control rule is non-modifiable during the user session;
• a module (M702c) for inserting the status into the response;
• a module for releasing the control session if the determined status indicates that the at least one control rule is non-modifiable during the user session.

6. **Computer program, characterized in that** it includes instructions for implementing the steps of the method for establishing at least one control rule for a communication session according to Claim 1, when this program is executed by a processor.

7. **Recording medium** readable by a control entity on which the program according to Claim 6 is recorded.
